(19) Europäisches Patentamt
European Patent Office
Office européen des brevets

(11) EP 4 243 126 A1

(12) # EUROPEAN PATENT APPLICATION
published in accordance with Art. 153(4) EPC

(43) Date of publication:
**13.09.2023 Bulletin 2023/37**

(21) Application number: **22899636.9**

(22) Date of filing: **27.01.2022**

(51) International Patent Classification (IPC):
***H01M 4/62*** (2006.01) ***H01M 10/0525*** (2010.01)

(86) International application number:
**PCT/CN2022/074139**

(87) International publication number:
**WO 2023/141844 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **LU, Lei**
  **Ningde, Fujian 352100 (CN)**
- **ZHU, Gaihong**
  **Ningde, Fujian 352100 (CN)**
- **DENG, Kaiming**
  **Ningde, Fujian 352100 (CN)**
- **LI, Shisong**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **BINDER AND USE THEREOF**

(57) The present application provides a binder, which is a polymer, and polymerized at least from following components: (a) at least one flexible monomer; (b) at least one rigid monomer, the rigid monomer including the following components: (b1) an alkene having a rigid group, and/or (b2) a polymerized monomer having a strong polar group; and (c) at least one hydrophilic group monomer. The binder provided by the present application is especially suitable for preparing a negative electrode sheet by a rolling method.

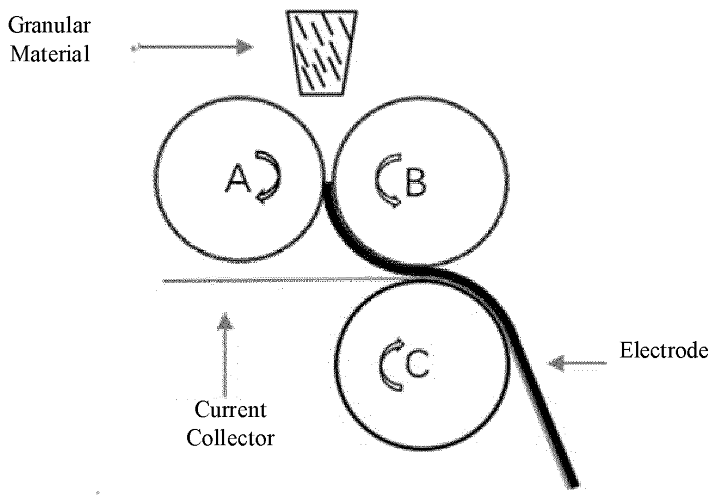


FIG. 1

EP 4 243 126 A1

## Description

### TECHNICAL FIELD

The present application relates to the field of secondary battery technologies, and in particular, to a binder. In addition, the present application further relates to a negative electrode sheet containing the binder, and a secondary battery, a battery module, a battery pack, and a power consumption device containing the negative electrode sheet.

### BACKGROUND

In recent years, the application of a secondary battery is wider and wider, for example, it may be applied to energy storage power systems, such as hydraulic, thermal, wind and solar power stations, as well as many fields such as electrical tools, electric bicycles, electric motorcycles, electric vehicles, military equipment and aerospace. Due to the great development of the secondary battery, higher requirements are put forward for an energy density of the secondary battery.

It is a best choice to increase the energy density of a battery by increasing a coating weight of an active material on an electrode sheet and a compaction density of the electrode sheet. However, an increase in a weight of the active material will amplify a problem of brittleness of a negative electrode, making the electrode sheet brittle when it is bent by an external force. Therefore, flexibility of the electrode sheet still needs to be improved.

### SUMMARY

The present application is made in view of the above subject, and a purpose thereof is to improve an energy density of a secondary battery and ensure good flexibility of a negative electrode sheet.

In order to achieve the above purpose, the present application provides a flexible binder for a secondary battery, and a negative electrode sheet, a secondary battery, a battery module, a battery pack, and a power consumption device including the flexible binder.

Therefore, a first aspect of the present application provides a negative electrode binder, which is a polymer, and polymerized at least from following components:

(a) at least one flexible monomer selected from $C_{4-18}$ alkene, optionally butadiene, 1-octene, and isoprene;

(b) at least one rigid monomer, the rigid monomer including the following components:

(b1) an alkene having a rigid group, where the rigid group is selected from $C_{5-20}$ aryl, $C_{4-8}$ saturated or unsaturated ring group, and $C_{5-30}$ heterocyclyl,
optionally, the rigid group is selected from phenyl, cyclohexenyl, six-membered cycloalkane group, six-membered ring ketone group, six-membered ring alcohol group,
and the component (b1) is optionally selected from styrene or limonenene;
and/or
(b2) a polymerized monomer having a strong polar group,
the component (b2) is optionally selected from acrylonitrile, acrylamide, acrylic acid, acrylates; and

(c) at least one hydrophilic monomer, where the hydrophilic monomer contains a hydrophilic group, the hydrophilic group is selected from carboxyl, hydroxyl, amine, aldehyde, alcohol, amino, amido, and

the component (c) is optionally selected from acrylic acid and its salt, ethylene glycol dimethacrylate, and methacrylamide.

The negative electrode binder according to the present application may be a block copolymer.

In the negative electrode binder according to the first aspect of the present application, the component (a) is a specific flexible monomer defined above, which may reduce a strong interaction force between binder molecules, and increase a molecular conformation change of the binder itself, improve flexibility of the binder itself, thereby improving the flexibility of an entire electrode sheet and greatly reducing a probability of fracture of a prepared thick negative electrode sheet during processing and use, and thereby improving a processing yield and use security of a lithium-ion battery, which overcomes a problem of powder shedding of the negative electrode during process of charging and discharging, and prolongs a service life of the lithium-ion battery; and the component (b) is a specific rigid monomer defined above, which may make the molecules have a strong interaction force therebetween and may provide sufficient strength for a diaphragm; and the component (c) is a specific hydrophilic group monomer defined above, which makes the negative electrode binder hydrophilic and thus suitable for being used in an aqueous system.

The inventor found that a polymeric binder formed from the above specific rigid component, the specific flexible

component and the specific hydrophilic component together has sufficient bonding property and is suitable for being used in the aqueous system, and has sufficient flexibility and strength so that it is especially suitable for a process of preparing a negative electrode sheet by a rolling method. Using the binder according to the present application, when the negative electrode sheet is prepared by the rolling method, the negative electrode sheet will not be brittle during a rolling process, and at the same time, the prepared negative electrode diaphragm has sufficient viscoelasticity and flexibility and will not residue on a roller.

Optionally, the binder of the present application is not prepared by an emulsion polymerization.

In any embodiment, the binder is polymerized at least from following components:

(a) a flexible monomer selected from butadiene, 1-octene, and isoprene;
(b) a rigid monomer selected from the following: (b 1) styrene or limonenene, and/or, (b2) acrylonitrile, and acrylamide; and
(c) a hydrophilic monomer selected from acrylic acid, ethylene glycol dimethacrylate, and methacrylamide.

In any embodiment, based on a total molar amount of the components (a)-(c), a molar proportion of the component (a) is in a range of 10%-60%, and optionally 30%-55%; a molar proportion of the component (b) is in a range of 10%-50%, and optionally 15%-45%; and a molar proportion of the component (c) is in a range of 10% to 30%, and optionally 15%-30%.

The above ratio ranges ensure that the formed negative electrode binder is suitable for the process of preparing the negative electrode sheet by the rolling method, and the negative electrode sheet will not fracture and residue on the roller.

In any embodiment, the binder is a gel polymer. The gel polymer has a better mechanical strength and flexibility than other forms of polymers. On the one hand, it may provide more contact points, improve cohesiveness required for an interface bonding and a membrane layer; at the same time, a flexible gel polymer may improve the flexibility of the electrode sheet, and may realize no cracking and fracture phenomenon in an ultra-thick coating, so as to improve battery life and safety performance. Therefore, in the present application, it is preferable to prepare the binder into the gel polymer.

In any embodiment, a viscosity of the binder is 70000mPa.s to 500000mPa.s, optionally 100000mPa.s to 300000mPa.s, and more optionally 110000mPa.s to 250000mPa.s

When the viscosity of the binder is too high and exceeds the above maximum value, it will cause difficulty in dispersing a slurry and cannot meet a processing requirement of the slurry; and when the viscosity of the binder is too low and below the above minimum value, it will lead to insufficient bonding strength of the slurry, and the electrode sheet is easy to shed powder and crack, so that the electrical performance is poor, thus affecting the service life of the battery.

In any embodiment, a weight average molecular weight of the binder is 300000 to 1000000, optionally 400000 to 900000, and more optionally 500000 to 800000.

With the increase of a molecular weight of the binder, the bonding strength of the binder is improved, and the mechanical strength is enhanced. When the molecular weight is too small, the viscosity and the mechanical strength of the binder cannot meet the requirements, and if a strength of the binder is too low, for example, less than 300000, bonding performance of the binder is insufficient, which will cause the electrode sheet shed powder or even fracture, affecting electrical performance and service life of a battery cell. When the molecular weight is too large, for example, greater than 1000000, a molecular chain will be entangled, making it difficult to disperse the slurry, therefore making it difficult to prepare the negative electrode sheet.

In any embodiment, a solid content of the binder is 4% to 10%.

In any embodiment, a glass transition temperature Tg of the binder is in a range of 60-200°C, optionally 100-150°C, and more optionally 110-120°C.

If the glass transition temperature of the binder is too high, for example, greater than 200°C, a movement of a chain segment of the binder will be restricted, resulting in the electrode sheet being too hard and brittle and prone to cracking, which will affecting the electrical performance and service life of the battery. If the glass transition temperature of the binder is too low, for example, lower than 60°C, it will reduce the binding strength and reduce the cohesiveness, which will lead to an easy powder shedding and even a membrane falling off during process of charging and discharging of the negative electrode, causing a potential safety hazard in the battery cell.

In any embodiment, a pH value of the binder is in a range of 5.0-8.0. The pH value may be measured by potentiometry. According to actual needs, a lithium hydroxide (LiOH) solution may be used to adjust the pH value of the binder to a range of 5.0-8.0.

The pH value of the binder affects the performance of the battery. If the pH value of the binder is not controlled, the pH value may be too small, for example, less than 5.0, at this time, the binder contains a large number of carboxyl groups (-COOH), which may cause lithium intercalation to occur in the battery at a low voltage, and thereby causing the battery efficiency worse for a first time, thus affecting a long-term cycle stability of the battery. The pH value may also be too high, for example, greater than 8.0, at this time, the binder contains a large amount of lithium carboxylates

(-COOLi), which may cause the prepared electrode sheet to be too brittle, and the electrode sheet is easy to fracture, thereby increasing a risk of lithium precipitation, and also causing a potential safety hazard in the battery cell.

A second aspect of the present application provides a negative electrode sheet, where includes the binder according to the first aspect of the present application.

In any embodiment, a proportion of the binder in the negative electrode diaphragm is 0.5-5% by weight, based on a weight of the negative electrode diaphragm.

In any embodiment, when the negative electrode sheet is wound on objects with diameters of 32mm, 25mm and 16mm, there is no crack on a surface of the negative electrode sheet.

A third aspect of the present application provides a method for preparing a negative electrode sheet, where includes following steps:

(1) a negative electrode active material, the binder according to the first aspect of the present application, a conductive agent and a solvent are mixed and kneaded,
(2) the binder-containing material kneaded in step (1) is extruded through an extruder and is granulated, and
(3) the granule obtained in step (2) is rolled.

The negative electrode binder of the present application is especially suitable for preparing the negative electrode sheet by the rolling method. Since the negative electrode binder may provide sufficient flexibility, a diaphragm containing the negative electrode binder will not be fractured when rolled, and it has a proper binding strength but will not residue on the roll.

A fourth aspect of the present application provides a secondary battery, including the negative electrode sheet according to the second aspect of the present application and a negative electrode sheet prepared according to the preparing method in the third aspect of the present application.

The negative electrode sheet provided by the present application has good flexibility and an energy density of the secondary battery is high.

**BRIEF DESCRIPTION OF DRAWINGS**

FIG. 1 is a schematic diagram of a negative electrode sheet forming method in an embodiment of the present application.
FIG. 2 is a schematic diagram of a negative electrode sheet forming method in another embodiment of the present application.
FIG. 3 is a diagram showing a cracking of an electrode sheet in a determination of flexibility of a negative electrode sheet.
FIG. 4 is a diagram showing no cracking of an electrode sheet in a determination of flexibility of a negative electrode sheet.
FIG. 5 is a schematic diagram of a secondary battery according to an embodiment of the present application.
FIG. 6 is an exploded view of the secondary battery according to an embodiment of the present application as shown in FIG. 5.
FIG. 7 is a schematic diagram of a battery module according to an embodiment of the present application.
FIG. 8 is a schematic diagram of a battery pack according to an embodiment of the present application.
FIG. 9 is an exploded view of the battery pack according to an embodiment of the present application as shown in FIG. 8.
FIG. 10 is a schematic diagram of a power consumption apparatus in which a secondary battery is used as a power source according to an embodiment of the present application.

DESCRIPTION OF REFERENCE SIGNS

1 battery pack; 2 upper box; 3 lower box; 4 battery module; 5 secondary battery; 51 housing; 52 electrode assembly; 53 top cover assembly.

**DESCRIPTION OF EMBODIMENTS**

Hereinafter, embodiments that specifically disclose a negative electrode sheet and a method for producing the same, a positive electrode sheet, a secondary battery, a battery module, a battery pack and an electrical apparatus of the present application may be described in detail with reference to the accompanying drawings as appropriate. However, unnecessarily detailed descriptions may be omitted in some cases. For example, detailed descriptions of well-known

matters and repeated descriptions of practically identical structures are omitted. This is done to avoid unnecessarily redundant descriptions for ease of understanding by persons skilled in the art. In addition, the drawings and the following description are provided for a full understanding of the present application by persons skilled in the art, and are not intended to limit the subject matter in the claims.

A "range" disclosed in the present application is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are further contemplated. In addition, if the minimum range values listed are 1 and 2, and the maximum range values listed are 3, 4 and 5, all the following ranges are contemplated: 1-3, 1-4, 1-5, 2-3, 2-4, and 2-6. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, and optionally, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

As mentioned in the background, the energy density is considered to be a biggest bottleneck restricting the development of a current secondary battery. Under the premise of not affecting the performance of the secondary battery, increasing a thickness of the electrode sheet is currently a common means to increase the energy density of the secondary battery. However, if the thickness of the electrode sheet is increased, the difficulty of the electrode sheet processing will also increase accordingly. An ultra-thick electrode sheet is prone to cracking or fracturing after drying for winding and other processes, there is also a possibility that the electrode sheet will fracture during the use of a prepared battery, and a fractured electrode sheet is likely to pierce the separator, and a short circuit will be formed with the negative electrode, which will affect the service life of the lithium battery, and in more serious cases, may cause a safety problem. Therefore, how to make a battery having a flexible electrode sheet and improve the safety and service life of the battery have become a technical problem to be solved urgently.

Unexpectedly, the inventor found that the above problems may be solved by using a binder having a specific structure. The binder is used in the secondary battery to promote the binding between the diaphragm and the current collector, however, the inventor unexpectedly found that a binder with a specific structure may ensure the binding between the diaphragm and the current collector, and at the same time, it may improve the flexibility of the electrode sheet, thereby improving the safety and service life of the battery.

Therefore, a first aspect of the present application provides a negative electrode binder, which is a polymer, and polymerized at least from following components:

(a) at least one flexible monomer selected from $C_{4-18}$ alkene, optionally butadiene, 1-octene, and isoprene;
(b) at least one rigid monomer, the rigid monomer including the following components:

(b1) an alkene having a rigid group, where the rigid group is selected from $C_{5-20}$ aryl, $C_{4-8}$ saturated or unsaturated ring group, and $C_{5-30}$ heterocyclyl,
optionally, the rigid group is selected from phenyl, cyclohexenyl, six-membered cycloalkane group, six-membered ring ketone group, six-membered ring alcohol group,
and the component (b1) is optionally selected from styrene or limonenene;

and/or
(b2) a polymerized monomer having a strong polar group,
the component (b2) is optionally selected from acrylonitrile, acrylamide, acrylic acid, acrylates; and

(c) at least one hydrophilic monomer, where the hydrophilic monomer contains a hydrophilic group, the hydrophilic group is selected from carboxyl, hydroxyl, amine, aldehyde, alcohol, amino, amido, and

the component (c) is optionally selected from acrylic acid and its salt, ethylene glycol dimethacrylate, and methacrylamide.

The term "monomer" means a simple unpolymerized form of a compound having a relatively low molecular weight, such as acrylonitrile, styrene, methyl methacrylate, and the like.

In the present application, $C_{4-18}$ alkene is an alkene having at least one double bond with 4 to 18 carbon atoms, which may be selected from 1, 3-butadiene, isoprene, 2, 3-Dimethyl-1, 3-butadiene, 1, 3-pentadiene, styrene, O-methylstyrene, M-methylstyrene and P-methylstyrene, $\alpha$-methylstyrene, $\beta$-methylstyrene, 2, 4-dimethylstyrene, O-ethylstyrene, M-ethylstyrene and P-ethylstyrene, P-tert-butylstyrene, divinylbenzene and vinylnaphthalene.

In the present application, a polymerized monomer with a strong polar group may be selected from succinic nitrile, sebaconitrile, fluorinated nitrile, chlorinated nitrile, acrylonitrile, methacrylonitrile, acrylic acid, methacrylic acid, crotonic acid, iso Crotonic acid, maleic acid, fumaric acid, citraconic acid, mesaconic acid, glutaconic acid, and itaconic acid.

The negative electrode binder according to the present application may be a block copolymer.

In the negative electrode binder according to the first aspect of the present application, the component (a) is a flexible monomer, which may reduce a strong interaction force between binder molecules, and increase a molecular conformation change of the binder itself, improve flexibility of the binder itself, thereby improving the flexibility of an entire electrode sheet and greatly reducing a probability of fracture of a prepared thick negative electrode sheet during processing and use, and thereby improving a processing yield and use security of a lithium-ion battery, which overcomes a problem of powder shedding of the negative electrode during process of charging and discharging, and prolongs a service life of the lithium-ion battery; and the component (b) is a rigid monomer, which may make the molecules have a strong interaction force therebetween and may provide sufficient strength for a diaphragm; and the component (c) is a hydrophilic group monomer, which makes the negative electrode binder hydrophilic and thus suitable for being used in an aqueous system.

The inventor found that a polymeric binder formed from the above specific rigid component, the specific flexible component and the specific hydrophilic component together has sufficient bonding property and is suitable for being used in the aqueous system, and has sufficient flexibility and strength so that it is especially suitable for a process of preparing a negative electrode sheet by a rolling method. Using the binder according to the present application, when the negative electrode sheet is prepared by the rolling method, the negative electrode sheet will not be brittle during a rolling process, and at the same time, the prepared negative electrode diaphragm has sufficient viscoelasticity and flexibility and will not residue on a roller.

In addition, the inventor of the present application further found that the strength of the negative electrode slurry prepared by using the above binder is significantly increased.

The binder according to the present application may all be synthesized by a method of sequential addition of an anion. The method may include following steps: high pressure nitrogen protection is adopted, for example, a polymerization reaction is carried out on an anionic polymerization device (for example, an HTSCP series, SCP2009) under a pressure of 0.3 to 0.5MPa. During the process of reaction, a nucleophile is used as an initiator. The present application does not specifically limit a specific type of the initiator, and any initiator commonly used in this field may be selected, for example, an alkali metal and its organic compounds. The polymerization reaction of the binder may be an anionic polymerization reaction, there are ion pairs in the polymerization reaction, and a corresponding anion active center may be generated after the reaction between the initiator and a reactant, and the anion active center may undergo a next chain growth reaction, thus a polymerization is carried out according to an order of the anion. Optionally, a monomer is added in an order of the component (a), (b), (c) or in an order of the component (b), (a), (c), and polymerized sequentially. Taking a styrene-butadiene-acrylic acid as an example, a rigid monomer styrene is added first to react for 20 to 40min, then a flexible monomer butadiene is added to react for 10 to 30min, and finally some hydrophilic monomers are added at about 30°C, such as an acrylic acid and an acrylonitrile to react for 20 to 40min, and a reaction temperature is controlled at 25°C to 40°C, and after the polymerization reaction is completed, a polar substance such as an alcohol may be used to terminate the reaction.

Optionally, the binder of the present application is not prepared by an emulsion polymerization.

In some embodiments, the binder is polymerized at least from following components:

(a) a flexible monomer selected from butadiene, 1-octene, and isoprene;
(b) a rigid monomer selected from the following: (b 1) styrene or limonenene, and/or, (b2) acrylonitrile, and acrylamide;

and
(c) a hydrophilic monomer selected from acrylic acid, ethylene glycol dimethacrylate, and methacrylamide.

In some embodiments, based on a total molar amount of the components (a)-(c), a molar proportion of the component (a) is in a range of 10%-60%, and optionally 30%-55%; a molar proportion of the component (b) is in a range of 10%-50%, and optionally 15%-45%; and a molar proportion of the component (c) is in a range of 10% to 30%, and optionally 15%-30%.

The above ratio ranges ensure that the formed negative electrode binder is suitable for the process of preparing the negative electrode sheet by the rolling method, and the negative electrode sheet will not fracture or residue on the roller.

In some embodiments, the binder is a gel polymer. Optionally, the binder is a medium-strength, and preferably a high-strength gel polymer.

In the present application, the binder is a gel polymer, which has following advantages: (1) it may provide more contact points, improve cohesiveness required for an interface bonding and a membrane layer; and (2) a flexible gel polymer may improve the flexibility of the electrode sheet, and may realize no cracking and fracture phenomenon in an ultra-thick coating, so as to improve battery life and safety performance. Therefore, in the present application, it is preferable to prepare the binder into the gel polymer.

In some embodiments, a viscosity of the binder is 70000 to 500000mPa.s.

Optionally, the viscosity of the binder is 100000 to 300000mPa.s, and more optionally 110000 to 250000mPa.s.

When the viscosity of the binder is too high and exceeds the above maximum value, it will cause difficulty in dispersing a slurry and cannot meet a processing requirement of the slurry; and when the viscosity of the binder is too low and below the above minimum value, it will lead to insufficient bonding strength of the slurry, and the electrode sheet is easy to shed powder and crack, so that the electrical performance is poor, thus affecting the service life of the battery.

The viscosity of the binder may be tested at 25°C by using a rotation method according to a standard GB/T 10247-2008. The specific operation of this standard is as follows: a beaker or a sample container is filled with the sample to be tested, make sure that no air bubble is introduced, and if necessary, the air bubble is removed by vacuuming. If the sample is volatile or easy to absorb moisture, etc., the beaker or the sample container should be sealed during a constant temperature process. The prepared sample beaker or sample container is put into a constant temperature bath, and sufficient time is ensured to reach a specified temperature. A suitable rotor is selected so that a reading is between 20%~90% of a maximum range. For a 63# rotor, it should satisfy 1000mpa·s≤viscosity≤10000mpa·s, 20%≤torque percentage≤90%, if a viscosity result is NG, a 64# rotor is used to instead, and the following results should be met at the same time: 10000mpa·s<viscosity, and 20%≤torque percentage≤90%. A rotor groove is flush with a slurry surface during the test. A motor is turned on, the motor is stopped after the viscosity reading of an instrument is stable after 5min, and the motor is turned on again after the rotor stops for a second test until a deviation of relative average values of the two consecutive test data is not more than 3%, and an average of the two measured values is taken as the result.

Herein, the test may include the following steps:
A rotational viscometer is used, a rotor is selected according to a viscosity of a sample. A viscometer lifting stand is used to lower the viscometer slowly, and the rotor is controlled to be submerged in a slurry until a mark on the rotor is equal to a liquid level. Test temperature: 25°C, rotation speed: 12rpm. A measurement key is pressed to start measurement, and after 5min the data remains stable, a viscosity value is just read.

In some embodiments, a weight average molecular weight of the binder is 300000 to 1000000, optionally 400000 to 900000, and more optionally 500000 to 800000.

With the increase of a molecular weight of the binder, the bonding strength of the binder is improved, and the mechanical strength is enhanced. When the molecular weight is too small, for example, less than 300000, the viscosity and the mechanical strength of the binder cannot meet the requirements, and if a strength of the binder is too low, for example, bonding performance of the binder is insufficient, which will cause the electrode sheet shed powder or even fracture, affecting electrical performance and service life of a battery cell. When the molecular weight is too large, for example, greater than 1000000, a molecular chain will be entangled, making it difficult to disperse the slurry, therefore making it difficult to prepare the negative electrode sheet.

In some embodiments, a solid content of the binder is 4% to 10%.

Due to the high molecular weight of the binder, if the solid content of the binder is greater than 10%, the preparation process is more difficult in the preparation of the binder, and if the solid content of the binder is less than 4%, the bonding performance of the binder is poor, and the viscosity is small. When it is used in the preparation of the negative electrode sheet, due to insufficient bonding strength, it will lead to an easy powder shedding and even a membrane falling off during process of charging and discharging of the prepared negative electrode

The solid content of the binder may be tested according to following method:
The binder with a mass of M1 is taken and put in an oven, it is placed at 120°C for 48h to dry, after drying, a mass of M2, and a solid content=M2/M1× 100%.

In some embodiments, a glass transition temperature Tg of the binder is in a range of 60-200°C, optionally 100-150°C, and more optionally 110-120°C.

If the glass transition temperature of the binder is too high, for example, greater than 200°C, a movement of a chain segment of the binder will be restricted, resulting in the electrode sheet being too hard and brittle and prone to cracking, which will affecting the electrical performance and service life of the battery. If the glass transition temperature of the binder is too low, for example, lower than 60°C, it will reduce the binding strength and reduce the cohesiveness, which will lead to an easy powder shedding and a membrane falling off during process of charging and discharging of the negative electrode, causing a potential safety hazard in the battery cell.

In some embodiments, a pH value of the binder is in a range of 5.0-8.0, and it is tested according to a potentiometric method.

According to actual needs, a lithium hydroxide (LiOH) solution may be used to adjust the pH value of the binder to a range of 5.0-8.0.

The pH value of the binder may be tested according to the following methods:

A glass electrode and a calomel electrode are immersed in a same solution to be tested to form a primary battery, and its electromotive force is related to the pH value of the solution. The pH value of the solution may be obtained by measuring an electromotive force of a primary battery. The specific steps are as follows: (1) the glass electrode is soaked according to an instruction manual of an acidity meter, and for the same sample, two buffer solutions with similar pH values should be selected to calibrate the acidity meter; (2) the sample is diluted to a viscosity less than 20Pa.s, a graduated cylinder is used to measure 50mL of sample which is poured into a beaker as a sample for determining the pH value; (3) the beaker containing the sample is put into a constant temperature bath, and after the temperature reaches a stable equilibrium, the glass electrode is rinsed with distilled water and dried, then the electrode is washed with a test solution, and then is inserted into the sample for test; (4) in the measurement of three consecutive samples, if the difference between the three pH values is greater than 0.2, the three samples should be taken and measured again until the difference between the pH value is not greater than 0.2; and (5) the result indicates that an arithmetic average value of the pH values of the three samples is taken as the test result, and the value is rounded to one decimal place.

The pH value of the binder affects the performance of the battery. If the pH value of the binder is not controlled, the pH value may be too small, for example, less than 5.0, at this time, the binder contains a large number of carboxyl groups (-COOH), which may cause lithium intercalation to occur in the battery cell at a low voltage, and thereby causing the secondary battery efficiency worse for a first time, thus affecting a long-term cycle stability of the battery cell.

The pH value may also be too high, for example, greater than 8.0, at this time, the binder contains a large amount of -COOLi, which may cause the prepared electrode sheet to be too brittle, and the electrode sheet is easy to fracture, thereby increasing a risk of lithium precipitation, and also causing a potential safety hazard in the battery cell.

A second aspect of the present application provides a negative electrode sheet, where includes the binder according to the first aspect of the present application.

In some embodiments, a proportion of the binder in the negative electrode diaphragm is 0.5-5% by weight, based on a weight of the negative electrode diaphragm.

In some embodiments, when the negative electrode sheet is wound on objects with diameters of 32mm, 25mm and 16mm, there is no crack on a surface of the negative electrode sheet.

A third aspect of the present application provides a method for preparing a negative electrode sheet, where includes following steps:

(1) a negative electrode active material, the binder according to the first aspect of the present application, a conductive agent and a solvent are mixed and kneaded,
(2) the binder-containing material kneaded in step (1) is extruded through an extruder and is granulated, and
(3) the granule obtained in step (2) is rolled.

The negative electrode binder of the present application is especially suitable for preparing the negative electrode sheet by the rolling method. As shown in FIG. 1 and FIG. 2, FIG. 1 shows a forming method of the negative electrode sheet in one embodiment, where a granular material is the granule obtained in the step (2), and the granular material is rolled by a roller A and a roller B into a film, and is then bonded to a current collector by a roller C. FIG. 2 shows a forming method of another negative electrode sheet in one embodiment, where a granular material is the granule obtained in the step (2), and the granular material is rolled by a roller A and a roller B into a film, and is then bonded to a current collector by a roller C. In the present application, there is no special limitation on the forming method of the negative electrode sheet, as long as it is prepared by the rolling method. Since the negative electrode binder may provide sufficient flexibility, a diaphragm containing the negative electrode binder will not be fractured when rolled, and it has a proper binding strength e but will not remain on the roll.

A fourth aspect of the present application provides a secondary battery, including the negative electrode sheet according to the second aspect of the present application and a negative electrode sheet prepared according to the

preparing method in the third aspect of the present application.

In one embodiment of the present application, a secondary battery is provided, where includes the above binder or the above negative electrode sheet.

Typically, a secondary battery includes a positive electrode sheet, a negative electrode sheet, an electrolyte, and a separator. During the charging and discharging process of the battery, an active ion is inserted and extracted back and forth between the positive electrode sheet and the negative electrode sheet. The electrolyte plays a role of conducting the ion between the positive electrode sheet and the negative electrode sheet. The separator is provided between the positive electrode sheet and the negative electrode sheet, and mainly plays a role of preventing the short circuit of the positive electrode and negative electrode, and at the same time, it may allow the ion to pass through.

[Positive Electrode Sheet]

A positive electrode sheet includes a positive electrode current collector and a positive electrode film layer provided on at least one surface of the positive electrode current collector, and the positive film layer includes a positive active material according to the first aspect of the present application.

As an example, the positive electrode current collector has two opposite surfaces in its thickness direction, and the positive electrode film layer is provided on either or both of the two opposite surfaces of the positive electrode current collector.

In some embodiments, the positive electrode current collector may use a metal foil or a composite current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive active material may use a positive active material for batteries known in the art. As an example, the positive active material may include at least one of the following materials: an olivine-structured lithium-containing phosphate, a lithium transition metal oxide, and their respective modified compounds. However, the present application is not limited to these materials, and other conventional materials that may be used as the positive active material for the battery may further be used. One type of these positive active materials may be used alone, or two or more types thereof may be used in combination. Where examples of the lithium transition metal oxide may include, but are not limited to, at least one of lithium cobalt oxides (such as $LiCoO_2$), lithium nickel oxides (such as $LiNiO_2$), lithium manganese oxides (such as $LiMnO_2$, $LiMn_2O_4$), lithium nickel cobalt oxides, lithium manganese cobalt oxides, lithium nickel manganese oxides, lithium nickel cobalt manganese oxides (such as $LiNi_{1/3}Co_{1/3}Mn_{1/3}O_2$, $NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), $LiNi_{0.8}Co_{0.1}Mn_{0.1}O_2$ ($NCM_{811}$ for short), lithium nickel cobalt aluminum oxides (such as $LiNi_{0.85}Co_{0.15}Al_{0.05}O_2$) and their modified compounds, or the like. Examples of the olivine-structured lithium-containing phosphate may include, but are not limited to, at least one of lithium iron phosphate (such as $LiFePO_4$ (LFP for short)), a composite of lithium iron phosphate and carbon, lithium manganese phosphate (such as $LiMnPO_4$), a composite of lithium manganese phosphate and carbon, lithium manganese iron phosphate, and a composite of lithium manganese iron phosphate and carbon.

In some embodiments, the positive electrode film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoro containing acrylate resin.

In some embodiments, the positive electrode film layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner. The foregoing components for preparing the positive electrode sheet such as the positive active material, the conductive agent, the binder, and any other components are dispersed in a solvent (such as N-methylpyrrolidone), to form a positive electrode slurry; and the positive electrode slurry is coated on the positive electrode current collector, and then after drying, cold pressing and other processes, a positive electrode sheet may be obtained.

[Negative Electrode Sheet]

A negative electrode sheet includes a negative electrode current collector and a negative electrode film layer provided on at least one surface of the negative electrode current collector, and the negative electrode film layer includes

a negative active material and the binder according to the first aspect of the present application.

As an example, the negative electrode current collector has two opposite surfaces in its thickness direction, and the negative electrode film layer is provided on either or both of the two opposite surfaces of the negative electrode current collector.

In some embodiments, the negative electrode current collector may use a metal foil or a composite current collector. For example, as the metal foil, a copper foil may be used. The composite current collector may include a polymer material base layer and a metal layer formed on at least one surface of the polymer material base layer. The composite current collector may be formed by forming a metal material (copper, copper alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), or the like).

In some embodiments, the negative active material may use a negative active material for batteries known in the art. As an example, the negative active material may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin oxide compounds and tin alloys. However, the present application is not limited to these materials, and other conventional materials that may be used as the negative active material for the battery may further be used. One type of these negative active materials may be used alone, or two or more types may be used in combination.

In some embodiments, the negative electrode film layer further optionally includes other binders. Other binders may be selected from at least one of styrene-butadiene rubber (SBR), polyacrylic acid (PAA), polyacrylate sodium (PAAS), polyacrylamide (PAM), polyvinyl alcohol (PVA), sodium alginate (SA), polymethacrylic acid (PMAA), and carboxymethyl chitosan (CMCS). Optionally, the negative electrode film layer only includes the binder according to the first aspect of the present application.

In some embodiments, the negative electrode film layer may further optionally include a conductive agent. The conductive agent may be selected from at least one of superconducting carbon, acetylene black, carbon black, Ketjen black, carbon dot, carbon nanotube, grapheme and carbon nanofibre.

In some embodiments, the negative film layer may further optionally include other adjuvants, for example, thickening agents (such as sodium carboxymethyl cellulose (CMC-Na)), or the like.

In some embodiments, the negative electrode sheet may be prepared by the following manner: the above components used to prepare the negative electrode sheet, such as the negative active material, the conductive agent, the binder and any other components are dispersed in a solvent (such as deionized water) to form a negative electrode slurry; and the negative electrode slurry is coated on the negative electrode current collector, and after drying, cold pressing and other processes, a negative electrode sheet may be obtained.

[Electrolyte]

An electrolyte plays the role of conducting an ion between a positive electrode sheet and a negative electrode sheet. The type of the electrolyte is not specifically limited in the present application, and may be selected according to needs. For example, the electrolyte may be selected from at least one of solid electrolyte and liquid electrolyte (that is, an electrolytic solution).

In some embodiments, the electrolyte uses an electrolytic solution. The electrolytic solution includes an electrolyte salt and a solvent.

In some embodiments, the electrolyte salt may be selected from at least one of lithium hexafluorophosphate ($LiPF_6$), lithium tetrafluoroborate ($LiBF_4$), lithium perchlorate ($LiClO_4$), lithium hexafluorarsenate ($LiAsF_6$), lithium bisfluorosulfonimide (LiFSI), lithium bistrifluoromethanesulfonimidate (LiTFSI), lithium trifluoromethanesulfonate (LiTFS), lithium difluorophosphate (LiDFOB), lithium difluorooxalateborate (LiBOB), lithium bisoxalateborate ($LiPO_2F_2$), lithium difluorobisoxalate phosphate (LiDFOP) and lithium tetrafluorooxalate phosphate (LiTFOP).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1, 4-butyrolactone (GBL), sulfolane (SF), dimethyl sulfone (MSM), methyl ethyl sulfone (EMS) and diethylsulfone (ESE).

In some embodiments, the electrolytic solution further optionally includes additives. As an example, the additive may include a negative electrode film-forming additive, or a positive electrode film-forming additive, or may further include an additive that may improve specific performance of the battery, such as, an additive for improving overcharge performance of the battery, or an additive for improving high-temperature performance or low-temperature performance of the battery.

[Separator]

In some embodiments, the secondary battery further includes a separator. The separator is disposed between a positive electrode sheet and a negative electrode sheet for separation. There is no particular limitation on the type of the separator in the present application, and any well-known porous-structure separator with good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer thin film, or may be a multilayer composite thin film, and is not particularly limited. When the separator is the multilayer composite thin film, the materials of each layer may be the same or different, and are not particularly limited.

[Outer Packing]

In some embodiments, the secondary battery may include an outer package for encapsulating the positive electrode sheet, the negative electrode sheet and the electrolyte. As an example, the positive electrode sheet, the negative electrode sheet, and the separator may be laminated or wound to form a laminated structure battery cell or a wound structure battery cell, the battery cell is encapsulated in the outer package; and the electrolyte may use electrolytic solution, the electrolytic solution is infiltrated in the battery cell. There may be one or more battery cells in the secondary battery, and their quantity may be adjusted as required.

In one embodiment, the present application provides an electrode assembly. In some embodiments, the positive electrode sheet, the negative electrode sheet and the separator may be subject to a winding process or a lamination process, to obtain an electrode assembly. The outer package may be used to package the foregoing electrode assembly and electrolyte.

In some embodiments, the outer package of the secondary battery may be a soft package, for example, a soft bag package. A material of the soft package may be plastic, for example, may include one or more of polypropylene (PP), polybutylene terephthalate (PBT), polybutylene succinate (PBS), and the like. In some embodiments, the outer package of the secondary battery may be a hard shell such as a hard plastic shell, an aluminum shell, or a steel shell.

<u>Preparation Method of Secondary</u> Battery

In one embodiment, the present application provides a method for preparing a secondary battery, where the negative electrode sheet according to the present application or the negative electrode sheet prepared according to the method according to the present is used.

The preparation of the secondary battery may also include a step of assembling the negative electrode sheet, the positive electrode sheet and the electrolyte of the present application to form a secondary battery. In some embodiments, the positive electrode sheet, the separator, and the negative electrode sheet may be sequentially wound or laminated, so that the separator is placed between the positive electrode sheet and the negative electrode sheet for isolation, and a battery cell is obtained. The battery cell is put in the outer package, the electrolyte is injected and sealed to obtain the secondary battery.

In some embodiments, the preparation of the secondary battery may further include a step of preparing a positive electrode sheet. As an example, the positive electrode substance, the conductive agent and the binder may be dispersed in a solvent (such as N-methylpyrrolidone, NMP for short) to form a uniform positive electrode slurry; and the positive electrode slurry is coated on the positive electrode current collector, and after drying, cold pressing and other processes, a positive electrode sheet is obtained.

In some embodiments, the preparation of the secondary battery includes a step of preparing a negative electrode sheet according to the method in the present application.

The shape of the secondary battery is not particularly limited in the present application, and may be cylindrical, square, or any other shapes. For example, FIG. 5 shows a secondary battery 5 of a square structure as an example.

In some embodiments, referring to FIG. 6, the outer package may include a housing 51 and a cover plate 53. Where the housing 51 may include a bottom plate and a side plate connected to the bottom plate. The bottom plate and the side plate are enclosed to form an accommodating cavity. The housing 51 has an opening communicating with the accommodating cavity, and the cover plate 53 may cover the opening to close the accommodating cavity. A positive electrode sheet, a negative electrode sheet, and a membrane may be subject to a winding process or a lamination process to form an electrode assembly 52. The electrode assembly 52 is packaged in the accommodating cavity. The electrolytic solution is infiltrated in the electrode assembly 52. The number of electrode assemblies 52 included in the secondary battery 5 may be one or more, and the may be selected by those skilled in the art according to specific actual needs.

In some embodiments, secondary batteries may be assembled into a battery module, and the number of

secondary batteries included in the battery module may include one or more, and the specific number may be selected by those skilled in the art according to application and capacity of the battery module.

FIG. 7 shows a battery module 4 as an example. Referring to FIG. 7, in the battery module 4, a plurality of secondary batteries 5 may be sequentially arranged along a length direction of the battery module 4. Certainly, they may be arranged in accordance with any other manner. Further, the plurality of secondary batteries 5 may be fixed by using fasteners.

Optionally, the battery module 4 may further include a shell with an accommodating space, and the plurality of secondary batteries 5 are accommodated in the accommodating space.

In some embodiments, the above battery modules may be further assembled into a battery pack, and the number of battery modules included in the battery pack may be one or more, and the specific number may be selected by those skilled in the art according to application and capacity of the battery pack.

FIG. 8 and FIG. 9 show a battery pack 1 as an example. Referring to FIG. 8 and FIG. 9, the battery pack 1 may include a battery box and a plurality of battery modules 4 disposed in the battery box. The battery box includes an upper box 2 and a lower box 3. The upper box 2 may cover the lower box 3 and form an enclosed space for accommodating the battery modules 4. The plurality of battery modules 4 may be arranged in the battery box in any manner.

In addition, the present application further provides a power consumption apparatus, the power consumption apparatus including at least one of the secondary battery, the battery module, or the battery pack provided in the present application. The secondary battery, the battery module, or the battery pack may be used as a power source of the power consumption apparatus or may be used as an energy storage unit of the power consumption apparatus. The power consumption apparatus may include a mobile device (for example, a mobile phone, a notebook computer, and the like), an electric vehicle (for example, a pure electric vehicle, a hybrid electric vehicle, a plug-in hybrid electric vehicle, an electric bicycle, an electric scooter, an electric golf cart, an electric truck, and the like), an electric train, a ship and a satellite, an energy storage system, or the like, but is not limited to this.

As the power consumption apparatus, a secondary battery, a battery module, or a battery pack may be selected according to usage requirements.

FIG. 10 shows a power consumption apparatus as an example. The power consumption apparatus is a pure electric vehicle, a hybrid electric vehicle, a plug-in hybrid electric vehicle, or the like. To meet a requirement of the power consumption apparatus for high power and high energy density of a secondary battery, a battery pack or a battery module may be used.

As another example, the apparatus may be a mobile phone, a tablet computer, a notebook computer, or the like. The apparatus usually requires lightness and thinness, and a secondary battery may be used as a power source.

Embodiment

Hereinafter, embodiments of the present application will be described. The embodiments described below are illustrative, only used to explain the present application, and should not be construed as a limitation to the present application. Where specific techniques or conditions are not specified in the embodiments, they are performed according to techniques or conditions described in the literature in the art or according to product specifications. The reagents or instruments used without specifying the manufacturer are conventional products that may be obtained from the market.

## I. Preparation of binder, negative electrode slurry and negative electrode sheet

### Embodiment 1

Step 1: Preparation of Styrene-Butadiene-Acrylic Block Copolymer Binder

An HTSCP series SCP2009 anion polymerization device is used. 1000ml of cyclohexane and 104.14g of styrene are mixed at room temperature, 100ml of tetrahydrofuran is added and mixed uniformly, then 0.97 (0.5% of a total amount of monomers)g of n-butyllithium is added as an initiator. Subsequently, a reactant is stirred and polymerized for 30min, and then 54.09g of butadiene is added to react for 25min. Afterwards, temperature of a reaction system is raised to 30°C, and 36.03g of acrylic acid is added at this temperature to react for 30min, and the reaction temperature is controlled at 30°C. The whole reaction process is carried out under the protection of high pressure nitrogen. After the polymerization reaction is completed, the reaction is terminated with an isopropanol.

A preparation scheme is as follows:

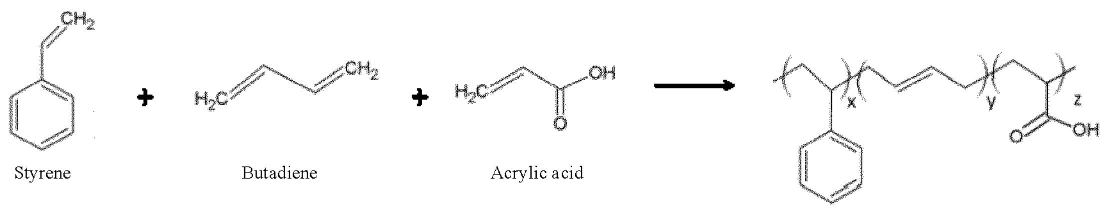

Styrene Butadiene Acrylic acid

Where an average value of x is 4020, an average value of y is 4020, and an average value of z is 2010.

After the binder is prepared, a LiOH solution is used to bring its pH to 7.5.

The prepared binder is a high-strength gel polymer with a solid content of 5% and a weight average molecular weight of 800000.

Step 2: Preparation of Negative Electrode Slurry

975g of graphite powder with a bulk density of 0.85g/cm$^3$ and 5g of conductive carbon are added into a mixer for dry mixing, and the dry mixed powder and 49ml of water are added into a kneader to knead and disperse, and then 400g of the binder prepared in step 1 is added (solid content: 20g). It is knead. The kneaded material is extruded through a screw extruder to obtain a slurry granule with a solid content of 70%.

Step 3: Preparation of Negative Electrode Sheet

The slurry granule obtained in step 2 is spread in a gap between the roll A and the roll B as shown in FIG. 2 through a hopper, and then they are rolled to form an electrode film. Then, the electrode film and a copper foil are rolled and laminated together through the transfer roller B and the composite roller C shown in FIG. 2, and after drying, a final face-to-face composite electrode sheet is prepared. During the preparation process, the equipment parameters are adjusted to prepare three negative electrode sheets with thicknesses of 110μm, 130μm, and 150μm, respectively.

Embodiment 2 and Comparative Example 2

Embodiment 2 and Comparative Example 2 are prepared similarly to Embodiment 1, refer to Table 1 for differences.

Embodiment 3

Embodiment 3 is prepared similarly to Embodiment 1, a difference is that an acrylic acid-butadiene-acrylonitrile block copolymer binder is prepared and used.

A preparation scheme of the acrylic acid-butadiene-acrylonitrile block copolymer binder is as follows:

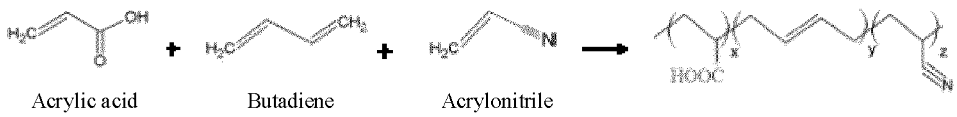

Acrylic acid Butadiene Acrylonitrile

Where an average value of x is 2565, an average value of y is 5130, and an average value of z is 2565.

A preparation method is as follows:

An HTSCP series SCP2009 anion polymerization device is used. 1000ml of cyclohexane and 72.06g of acrylic acid are mixed at room temperature, 100ml of tetrahydrofuran is added and mixed uniformly, then 1.16g of n-butyllithium is added as an initiator. Subsequently, a reactant is stirred and polymerized for 30min, and then 108.17g of butadiene is added to react for 25min. Afterwards, temperature of a reaction system is raised to 30°C, and 53.05g of acrylonitrile is added at this temperature to react for 30min, and the reaction temperature is controlled at 30°C. The whole reaction process is carried out under the protection of high pressure nitrogen. After the polymerization reaction is completed, the reaction is terminated with an isopropanol.

Embodiment 4 and Comparative Example 3

Embodiment 4 and Comparative Example 3 are prepared similarly to Embodiment 3, refer to Table 1 for differences.

Embodiment 5

Embodiment 5 is prepared similarly to Embodiment 1, a difference is that a butadiene-styrene-acrylonitrile-acrylic acid block copolymer binder is prepared and used, and a preparation method is as follows:
An HTSCP series SCP2009 anion polymerization device is used. 1000ml of cyclohexane and 54.09g of butadiene are mixed at room temperature, 100ml of tetrahydrofuran is added and mixed uniformly, then 1.10g of n-butyllithium is added as an initiator. A reactant is stirred and polymerized for 30min, and then 104.14g of styrene is added to react for 25min. Subsequently, the reactant is stirred and polymerized for 30min, and then 26.53g of acrylonitrile is added to react for 25min. Afterwards, temperature of a reaction system is raised to 30°C, and 36.03g of acrylic acid is added at this temperature to react for 30min, and the reaction temperature is controlled at 30°C. The whole reaction process is carried out under the protection of high pressure nitrogen. After the polymerization reaction is completed, the reaction is terminated with an isopropanol.

Embodiment 6

Embodiment 6 is prepared similarly to Embodiment 1, a difference is that a 1-octene-styrene-ethylene glycol dimethacrylate block copolymer binder is prepared and used, and a preparation method is as follows:
An HTSCP series SCP2009 anion polymerization device is used. 1000ml of cyclohexane and 112.21g of 1-octene are mixed at room temperature, 100ml of tetrahydrofuran is added and mixed uniformly, then 1.58g of n-butyllithium is added as an initiator. A reactant is stirred and polymerized for 30min, and then 104.14g of styrene is added to react for 25min. Subsequently, the reactant is stirred and polymerized for 30min, and then 99.11g of ethylene glycol dimethacrylate is added to react for 30min. The reaction temperature is controlled at 30°C. The whole reaction process is carried out under the protection of high pressure nitrogen. After the polymerization reaction is completed, the reaction is terminated with an isopropanol.

Embodiment 7

Embodiment 7 is prepared similarly to Embodiment 1, a difference is that an isoprene-limonenene-methacrylamide block copolymer binder is prepared and used, and a preparation method is as follows:
An HTSCP series SCP2009 anion polymerization device is used. 1000ml of cyclohexane and 68.11g of isoprene are mixed at room temperature, 100ml of tetrahydrofuran is added and mixed uniformly, then 1.23g of n-butyllithium is added as an initiator. Subsequently, a reactant is stirred and polymerized for 30min, and then 136.23g of limonenene is added to react for 25min. Afterwards, the temperature of a reaction system is raised to 30°C, and 42.55g of methacrylamide is added at this temperature to react for 30min, and the reaction temperature is controlled at 30°C. The whole reaction process is carried out under the protection of high pressure nitrogen. After the polymerization reaction is completed, the reaction is terminated with an isopropanol.

Embodiment 8

Embodiment 8 is prepared similarly to Embodiment 1, a difference is that an isoprene-acrylamide-ethylene glycol dimethacrylate copolymer binder is prepared and used, and a specific preparation method is as follows:
An HTSCP series SCP2009 anion polymerization device is used. 1000ml of cyclohexane and 68.11g of isoprene are mixed at room temperature, 100ml of tetrahydrofuran is added and mixed uniformly, then 0.70g of N-butyllithium is added as an initiator. A reactant is stirred and polymerized for 30min, and then 35.54g of acrylamide is added to react for 25min. Subsequently, the reactant is stirred and polymerized for 30min, and 99.11g of ethylene glycol dimethacrylate is added at this temperature to react for 30min, and the reaction temperature is controlled at 30°C. The whole reaction process is carried out under the protection of high pressure nitrogen. After the polymerization reaction is completed, the reaction is terminated with an isopropanol.

Embodiment 9

Embodiment 9 is prepared similarly to Embodiment 1, a difference is that a 1-octene-acrylic acid-methacrylamide copolymer binder is prepared and used, and a specific preparation method is as follows:
An HTSCP series SCP2009 anion polymerization device is used. 1000ml of cyclohexane and 112.21g of 1-octene are mixed at room temperature, 100ml of tetrahydrofuran is added and mixed uniformly, then 0.70g of n-butyllithium is added as an initiator. The reactant is stirred and polymerized for 30min, and then 36.03g of acrylic acid is added to react for 25min. Afterwards, the temperature of a reaction system is raised to 30°C, and then 36.03g of methacrylamide is added to react for 30min, and the reaction temperature is controlled at 30°C. The whole reaction process is carried out under

the protection of high pressure nitrogen. After the polymerization reaction is completed, the reaction is terminated with an isopropanol.

Comparative Example 1

Comparative Example 1 is prepared similarly to Embodiment 1, a difference is that a styrene-butadiene rubber (SBR) is used as a binder and a carboxymethyl cellulose (CMC) is added to a negative electrode slurry. A weight ratio of each substance added in the negative electrode slurry is: graphite powder: conductive carbon: CMC: SBR=97.5%:0.5%: 1%: 1%.

In each of the above Embodiments and Comparative Examples, the binders prepared in Embodiments 1, 3 and 5-9 are all high-strength gel polymers, and the binders prepared in Embodiments 2 and 4 and Comparative Example 3 are medium-strength gel polymer, the binders prepared in Comparative Examples 1-2 are low-strength gel polymers.

In Embodiments 1-9 and Comparative Examples 1-3, an amount of the binder added is 2% by weight, based on the total weight of each substance (except a solvent) used to prepare the negative electrode slurry, where an amount of the added binder is calculated based on a solid content of the binder.

**II. Performance Evaluation**

1. Determination of Binder Property

(1) Determination of a weight average molecular weight of a binder

A GPC gel permeation chromatography is used, in which a concentration detector (differential detector) is equipped to detect an outflow time and a concentration of each component. A molecular weight of the sample is detected through the GPC, first, a series of standard samples with a known molecular weight should be used to establish a calibration curve of a molecular weight to an outflow time/volume. Then the sample to be tested is injected, and a relative molecular weight Mw is calculated according to the previously established standard curve.

(2) Determination of a binder viscosity

A rotation method is used according to a standard GB/T 10247-2008 to text. A specific operation is as follows: A rotational viscometer is used, a rotor is selected according to a viscosity of a sample. A viscometer lifting stand is used to lower the viscometer slowly, and the rotor is submerged in a slurry until a mark on the rotor is equal to a liquid level. Test temperature: 25°C, rotation speed: 12rpm. A measurement key is pressed to start measurement, and after 5min the data remains stable, a viscosity value is just read.

(3) Determination of the pH value of the binder

A glass electrode and a calomel electrode are immersed in a same solution to be tested to form a primary battery, and its electromotive force is related to the pH value of the solution. The pH value of the solution may be obtained by measuring an electromotive force of a primary battery. The specific steps are as follows: (1) the glass electrode is soaked according to an instruction manual of an acidity meter, and for the same sample, two buffer solutions with similar pH values should be selected to calibrate the acidity meter; (2) the binder sample is diluted to a viscosity less than 20Pa.s, a graduated cylinder is used to measure 50mL of sample which is poured into a beaker as a sample for determining the pH value; (3) the beaker containing the sample is put into a constant temperature bath, and after the temperature reaches a stable equilibrium, the glass electrode is rinsed with distilled water and dried, then the electrode is washed with a test solution, and then is inserted into the sample for test; (4) in the measurement of three consecutive samples, if the difference between the three pH values is greater than 0.2, the three samples should be taken and measured again until the difference between the pH value is not greater than 0.2; and (5) the result indicates that an arithmetic average value of the pH values of the three samples is taken as the test result, and the value is rounded to one decimal place.

(4) Determination of a solid content of the binder

The binder with a mass of M1 is taken and put in an oven, it is placed at 120°C for 48h to dry, after drying, a mass of M2.

$$\text{A solid content} = M2/M1 \times 100\%.$$

(5) Determination of a binder glass transition temperature (Tg)

Tg is determined by a differential scanning calorimetry. The specific operation is as follows:
A 20mg sample is taken and placed in a crucible. A DSC furnace body is opened (guaranteed to be at room temperature), a crucible containing the sample is placed on a sample tray in the furnace body with a tweezer, and another same empty crucible is taken and placed on a reference tray for reference. A furnace lid is covered to measure the glass transition temperature of the sample.

2. Negative Electrode Slurry Strength Test

An Instron metal tensile testing machine is used for testing, and the specific steps include: in each Embodiment and Comparative Example, the negative electrode slurry is rolled to form a negative electrode active material layer with a thickness of 1mm, and then it is cut into a sample with a length of 100mm, a width of 20mm, and a thickness of 1mm. A tensile strength (Rm) of the sample is tested with a tensile testing machine at 2mm/min. The test result is shown in Table 1.

3. Determination of Flexibility of Negative Electrode Sheet

The flexibility of the negative electrode sheet prepared in each Embodiment and Comparative Example is tested by a winding method. The specific test process is as follows:

Negative electrode sheets with three thicknesses prepared in each Embodiment and Comparative Example is respectively wound on cylindrical rods with diameters of 32mm, 25mm and 16mm, and observed whether they are cracked. FIG. 3 shows a case of cracking, and FIG. 4 shows a case of not cracking.

The result is shown in the Table below, where "√" means that there is no cracks on a surface of the electrode sheet, and "×" means that there is a crack on the surface of the electrode sheet.

A diameter of a rod is small, and the electrode sheet does not crack, so the flexibility is good.

A result of specific performance measurement is shown in the following Table 1.

Table 1

| Number | Binder | | | | | | | Negative Electrode Slurry | Thickness of Negative Electrode Sheet | | | | | |
|---|---|---|---|---|---|---|---|---|---|---|---|---|---|---|
| | Category | Proportion of Each Monomer (mol%) | Molecular Weight Mw/10 000 | Solid Content % | Viscosity /mPa·S | pH Value | Tg (°C) | Strength (Rm)/MPa | 110μm | | 130μm | | 150μm | |
| Embodiment 1 | Styrene-butadiene-acrylic acid | Styrene : 40 | 80 | 5% | 190000 | 7.5 | 115 | 0.33 | 32mm | ✓ | 32mm | ✓ | 32mm | ✓ |
| | | Butadiene: 40 | | | | | | | 25mm | ✓ | 25mm | ✓ | 25mm | ✓ |
| | | Acrylic acid: 20 | | | | | | | 16mm | ✓ | 16mm | ✓ | 16mm | ✓ |
| Embodiment 2 | Styrene-butadiene-acrylic acid | Styrene: 40 | 60 | 5% | 120000 | 7.0 | 110 | 0.20 | 32mm | ✓ | 32mm | ✓ | 32mm | ✓ |
| | | Butadiene: 40 | | | | | | | 25mm | ✓ | 25mm | ✓ | 25mm | ✓ |
| | | Acrylic acid: 20 | | | | | | | 16mm | ✓ | 16mm | ✓ | 16mm | ✓ |
| Embodiment 3 | Acrylic acid-butadiene-acrylonitrile | Acrylic acid: 25 | 70 | 5% | 165000 | 7.5 | 120 | 0.29 | 32mm | ✓ | 32mm | ✓ | 32mm | ✓ |
| | | Butadiene: 50 | | | | | | | 25mm | ✓ | 25mm | ✓ | 25mm | ✓ |
| | | Acrylonitrile: 25 | | | | | | | 16mm | ✓ | 16mm | ✓ | 16mm | ✓ |
| Embodiment 4 | Acrylic acid-butadiene-acrylonitrile | Acrylic acid: 25 | 60 | 5% | 200000 | 7.6 | 115 | 0.24 | 32mm | ✓ | 32mm | ✓ | 32mm | ✓ |
| | | Butadiene: 50 | | | | | | | 25mm | ✓ | 25mm | ✓ | 25mm | ✓ |
| | | Acrylonitrile: 25 | | | | | | | 16mm | ✓ | 16mm | ✓ | 16mm | ✓ |
| Embodiment 5 | Butadiene-styrene-acrylonitrile | Butadiene: 33 | 80 | 5% | 193000 | 7.5 | 117 | 0.35 | 32mm | ✓ | 32mm | ✓ | 32mm | ✓ |
| | | Styrene: 33 | | | | | | | 25mm | ✓ | 25mm | ✓ | 25mm | ✓ |
| | | Acrylonitrile: | | | | | | | 16mm | ✓ | 16mm | ✓ | 16mm | ✓ |

(continued)

| Number | Binder | | | | | | | Negative Electrode Slurry | Thickness of Negative Electrode Sheet | | | | | |
|---|---|---|---|---|---|---|---|---|---|---|---|---|---|---|
| | Category | Proportion of Each Monomer (mol%) | Molecular Weight Mw/10 000 | Solid Content % | Viscosity /mPa·S | pH Value | Tg (°C) | Strength (Rm)/MPa | 110μm | | 130μm | | 150μm | |
| | acrylic acid | 16.7 | | | | | | | | | | | | |
| | | Acrylic acid: 16.7 | | | | | | | | | | | | |
| Embodiment 6 | 1-octene-styrene-ethylene glycol dimethacrylate | 1-octene: 40 | 80 | 5% | 195000 | 7.5 | 110 | 0.32 | 32mm | ✓ | 32mm | ✓ | 32mm | ✓ |
| | | Styrene: 40 | | | | | | | 25mm | ✓ | 25mm | ✓ | 25mm | ✓ |
| | | Ethylene glycol dimethacrylate: 20 | | | | | | | 16mm | ✓ | 16mm | ✓ | 16mm | ✓ |
| Embodiment 7 | Isoprene-limonene-methacrylamide | Isoprene: 40 | 75 | 5% | 185000 | 7.5 | 115 | 0.30 | 32mm | ✓ | 32mm | ✓ | 32mm | ✓ |
| | | Limonenene: 40 | | | | | | | 25mm | ✓ | 25 mm | ✓ | 25mm | ✓ |
| | | Methacrylamide: 20 | | | | | | | 16mm | ✓ | 16 mm | ✓ | 16mm | ✓ |
| Embodiment 8 | Isoprene acrylamide-ethylene glycol dimethacrylate | Isoprene: 50 | 80 | 5% | 193000 | 7.5 | 110 | 0.33 | 32mm | ✓ | 32mm | ✓ | 32mm | ✓ |
| | | Acrylamide: 25 | | | | | | | 25mm | ✓ | 25 mm | ✓ | 25mm | ✓ |
| | | Ethylene glycol dimethacrylate: 25 | | | | | | | 16mm | ✓ | 16 mm | ✓ | 16mm | ✓ |

(continued)

| Number | Binder | | | | | | | Negative Electrode Slurry | Thickness of Negative Electrode Sheet | | | | | |
|---|---|---|---|---|---|---|---|---|---|---|---|---|---|---|
| | Category | Proportion of Each Monomer (mol%) | Molecular Weight Mw/10 000 | Solid Conte nt % | Viscosit y /mPa·S | pH Val ue | Tg (°C) | Strength (Rm)/MPa | 110μm | | 130μm | | 150μm | |
| Embodi ment 9 | 1-octene-propylene alcohol-methacrylamide | 1-octene: 50 | 76 | 5% | 197000 | 7.5 | 110 | 0.31 | 32mm | ✓ | 32mm | ✓ | 32mm | ✓ |
| | | Acrylic acid: 25 | | | | | | | 25mm | ✓ | 25 mm | ✓ | 25mm | ✓ |
| | | Methacrylami de: 25 | | | | | | | 16mm | ✓ | 16 mm | ✓ | 16mm | ✓ |
| Compara tive Example 1 | SBR | / | / | 5% | 3000 | 7.5 | / | 0.02 | 32mm | × | 32mm | × | 32mm | × |
| | | | | | | | | | 25mm | × | 25 mm | × | 25mm | × |
| | | | | | | | | | 16mm | × | 16 mm | × | 16mm | × |
| Comparative Example 2 | Styrene-butadiene-acrylic acid | Styrene: 40 | 35 | 5% | 70000 | 7.5 | 100 | 0.035 | 32mm | ✓ | 32mm | ✓ | 32mm | × |
| | | Butadiene: 40 | | | | | | | 25mm | ✓ | 25 mm | × | 25mm | × |
| | | Acrylic acid: 20 | | | | | | | 16mm | × | 16 mm | × | 16mm | × |
| Compara tive Example 3 | Acrylic acid-butadiene-acrylonitrile | Acrylic acid: 25 | 40 | 5% | 105000 | 7.5 | 105 | 0.08 | 32mm | ✓ | 32mm | ✓ | 32mm | × |
| | | Butadiene: 50 | | | | | | | 25mm | ✓ | 25 mm | × | 25mm | × |
| | | Acrylonitrile: 25 | | | | | | | 16mm | ✓ | 16 mm | × | 16mm | × |

As may be seen from Table 1 that, compared with Comparative Examples 1-3, Embodiments 1-9 that have added the binder according to the present application have achieved a negative electrode slurry with a significantly higher strength (the slurry strengths of the negative electrode slurries in Embodiments 1-9 are in a range of 0.20-0.35MPa, which is less than 0.1MPa in Comparative Examples 1-3), and better electrode sheet flexibility is achieved at a higher electrode sheet thickness.

It may be seen from Comparative Example 1 where a conventional binder styrene-butadiene rubber is added and other Comparative Examples and Embodiments where the binder of the present application is added that the addition of the binder of the present application may improve the flexibility of the negative electrode sheet.

From the comparison of Embodiments 1-2 and Comparative Example 2 and the comparison of Embodiments 3-4 and Comparative Example 3, it may be seen that a binder in a high-strength gel state and a binder with larger molecular weight, viscosity and Tg may achieve better flexibility of the negative electrode sheet.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. A binder, which is a polymer, and polymerized at least from following components:

    (a) at least one flexible monomer selected from $C_{4-18}$ alkene, optionally butadiene, 1-octene, and isoprene;
    (b) at least one rigid monomer, the rigid monomer comprising the following components:

        (b1) an alkene having a rigid group, wherein the rigid group is selected from $C_{5-20}$ aryl, $C_{4-8}$ saturated or unsaturated ring group, and $C_{5-30}$ heterocyclyl,
        optionally, the rigid group is selected from phenyl, cyclohexenyl, six-membered cycloalkane group, six-membered ring ketone group, six-membered ring alcohol group,
        and the component (b1) is optionally selected from styrene or limonenene;
        and/or
        (b2) a polymerized monomer having a strong polar group,
        the component (b2) is optionally selected from acrylonitrile, acrylamide, acrylic acid, acrylate; and

    (c) at least one hydrophilic monomer, wherein the hydrophilic monomer contains a hydrophilic group, the hydrophilic group is selected from carboxyl, hydroxyl, amine, aldehyde, alcohol, amino, amido, and

    the component (c) is optionally selected from acrylic acid and its salt, ethylene glycol dimethacrylate, and methacrylamide.

2. The binder according to claim 1, wherein based on a total molar amount of the components (a)-(c), a molar proportion of the component (a) is in a range of 30%-55%; a molar proportion of the component (b) is in a range of 15%-45%; and a molar proportion of the component (c) is in a range of 15%-30%.

3. The binder according to claim 1 or 2, wherein the binder is a gel polymer, and optionally a medium-strength or high-strength gel polymer.

4. The binder according to any one of claims 1-3, wherein a viscosity of the binder is 70000 to 500000mPa.s, optionally 100000 to 300000mPa.s, and more optionally 110000 to 250000mPa.s.

5. The binder according to any one of claims 1-4, wherein a weight average molecular weight of the binder is 300000 to 1000000, optionally 400000 to 900000, and more optionally 500000 to 800000.

6. The binder according to any one of claims 1-5, wherein a solid content of the binder is 4% to 10%.

7. The binder according to any one of claims 1-6, wherein a glass transition temperature Tg of the binder is in a range

of 60-200°C, optionally 100-150°C, and more optionally 110-120°C.

**8.** The binder according to any one of claims 1-7, wherein a pH value of the binder is in a range of 5.0-8.0.

**9.** A negative electrode sheet, comprising a negative electrode current collector and a negative electrode diaphragm, wherein the negative electrode diaphragm contains the binder according to claims 1-8.

**10.** The negative electrode sheet according to claim 9, when it is wound on objects with diameters of 32mm, 25mm and 16mm, there is no crack on a surface of the negative electrode sheet.

**11.** A secondary battery, comprising the binder according to any one of claims 1-8 or the negative electrode sheet according to claim 9 or 10.

**12.** A battery module, comprising the secondary battery according to claim 11.

**13.** A battery pack, comprising the battery module according to claim 12.

**14.** A power consumption device, comprising at least one selected from the second battery according to claim 11, the battery module according to claim 12 or the battery pack according to claim 13.

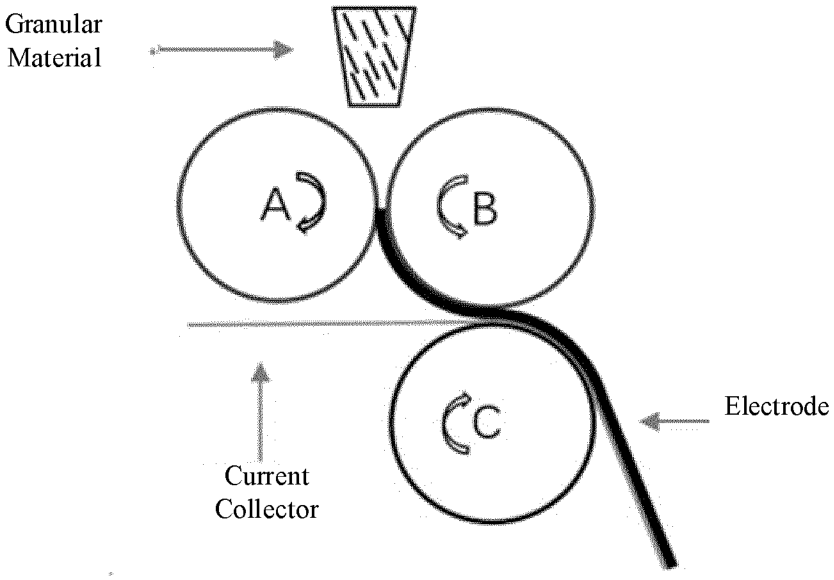
Granular
Material
A
B
C
Electrode
Current
Collector

FIG. 1

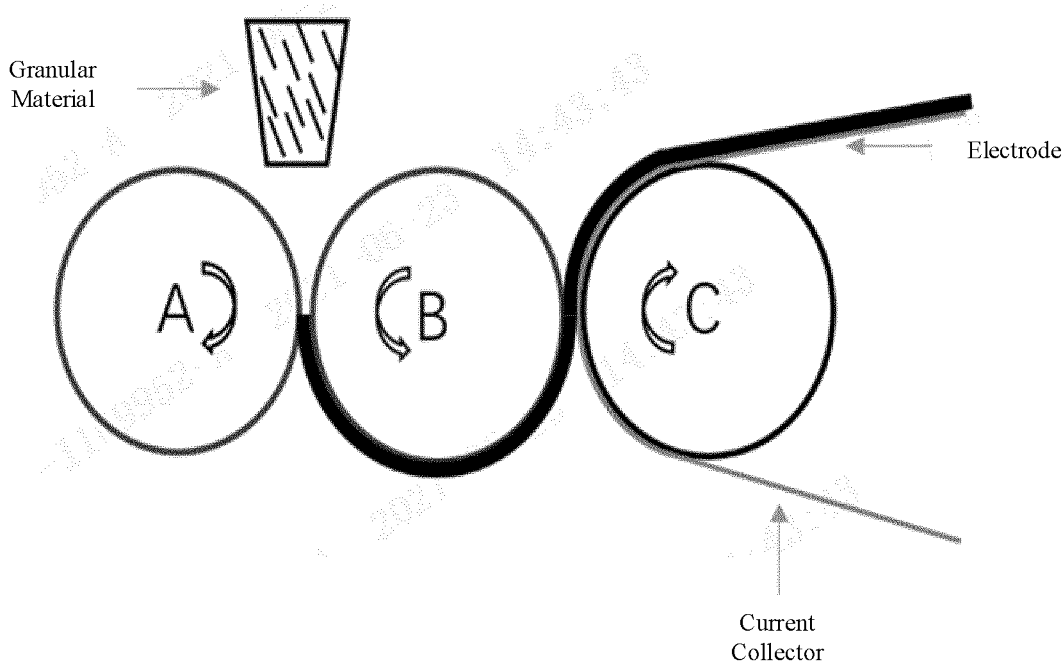
Granular
Material
A
B
C
Electrode
Current
Collector

FIG. 2

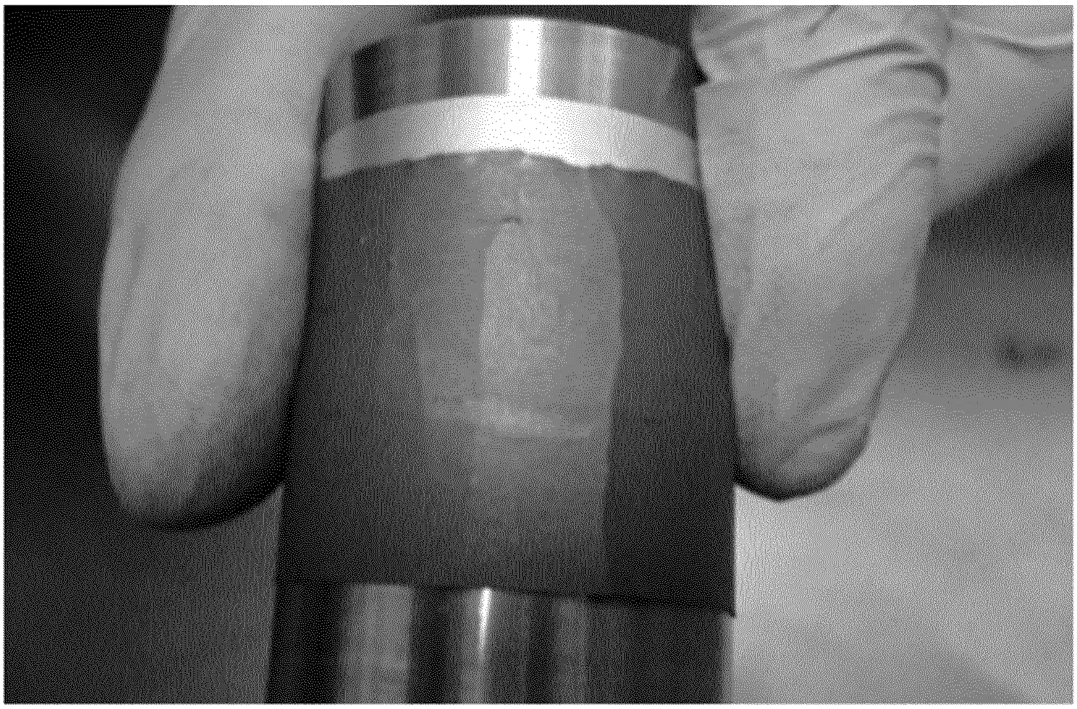

FIG. 3

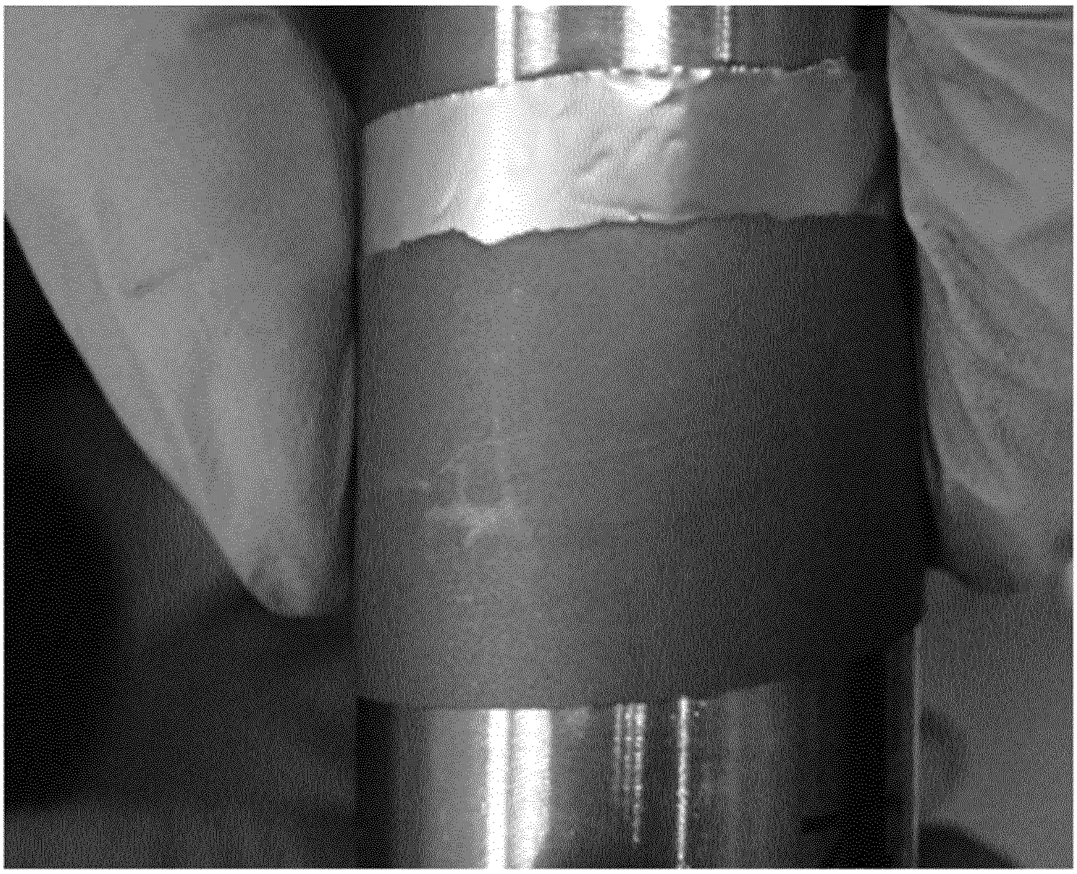

FIG. 4

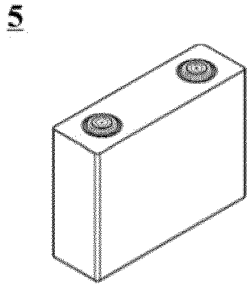


FIG. 5

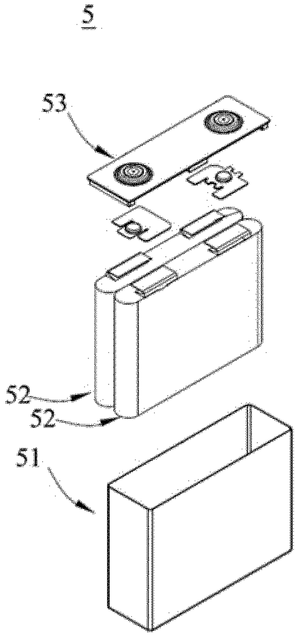


FIG. 6

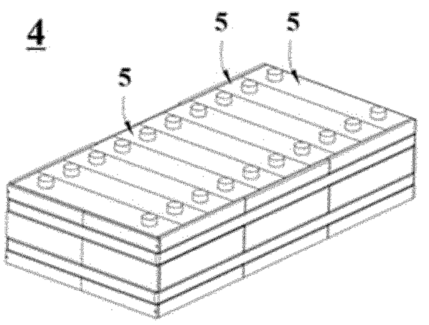


FIG. 7

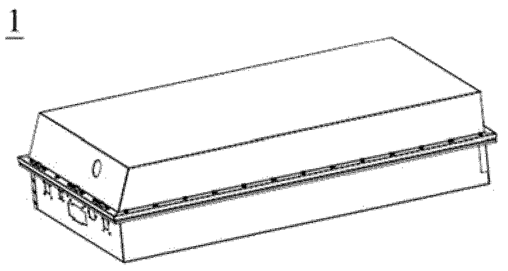


FIG. 8

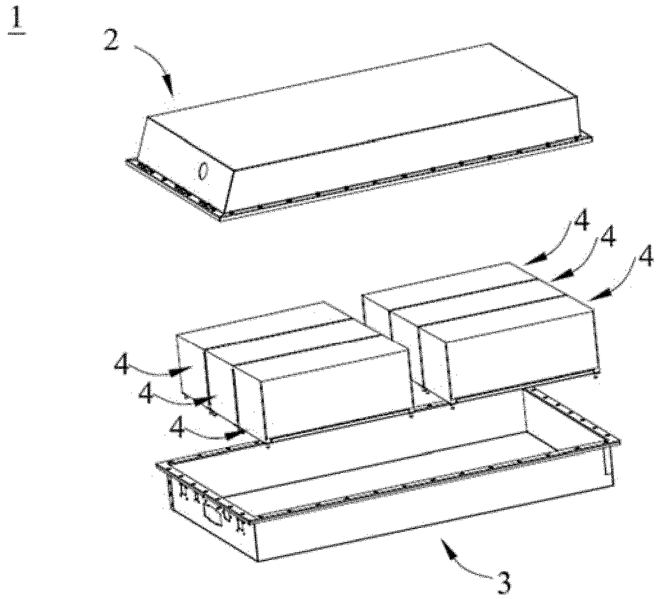


FIG. 9

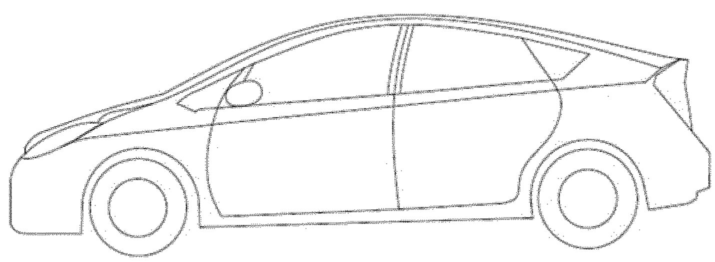

FIG. 10

## INTERNATIONAL SEARCH REPORT

International application No.
**PCT/CN2022/074139**

**A. CLASSIFICATION OF SUBJECT MATTER**

H01M 4/62(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 电池, 粘结剂, 粘合剂, 聚合, 单体, 柔性, 刚性, 亲水, 丁二烯, 戊二烯, 辛烯, 苯乙烯, 柠檬烯, 丙烯酸, 丙烯酰胺, battery, binder, polymer, monomer, hard, soft, styrene, acrylic, butadiene, pentadiene, octene, limonene, acrylamide, hydrophilic

**C. DOCUMENTS CONSIDERED TO BE RELEVANT**

| Category* | Citation of document, with indication, where appropriate, of the relevant passages | Relevant to claim No. |
|---|---|---|
| X | CN 101156264 A (LG CHEMICAL LTD.) 02 April 2008 (2008-04-02)<br>description, page 3, paragraph 1-page 17, paragraph 3 | 1-14 |
| X | CN 108929401 A (CHONGQING YUNTIANHUA HANEN NEW MATERIAL DEVELOPMENT CO., LTD.) 04 December 2018 (2018-12-04)<br>description, paragraphs 0004-0047 | 1-14 |
| X | CN 104448158 A (BEIJING BLUE OCEAN BLACKSTONE TECHNOLOGY CO., LTD.) 25 March 2015 (2015-03-25)<br>description, paragraphs 0007-0012 | 1-14 |
| X | CN 113161549 A (A123 SYSTEMS LLC et al.) 23 July 2021 (2021-07-23)<br>description, paragraphs 0007-0042 | 1-14 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 April 2022** | **28 September 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**
**Information on patent family members**

International application No.
**PCT/CN2022/074139**

| Patent document cited in search report | | | Publication date (day/month/year) | Patent family member(s) | | | Publication date (day/month/year) |
|---|---|---|---|---|---|---|---|
| CN | 101156264 | A | 02 April 2008 | WO | 2006107173 | A1 | 12 October 2006 |
| | | | | US | 2012330589 | A1 | 27 December 2012 |
| | | | | US | 2006257739 | A1 | 16 November 2006 |
| | | | | KR | 20060107341 | A | 13 October 2006 |
| | | | | JP | 2008537841 | A | 25 September 2008 |
| | | | | KR | 767966 | B1 | 17 October 2007 |
| | | | | CN | 101156264 | B | 25 May 2011 |
| | | | | US | 8277976 | B2 | 02 October 2012 |
| | | | | US | 8758937 | B2 | 24 June 2014 |
| CN | 108929401 | A | 04 December 2018 | | None | | |
| CN | 104448158 | A | 25 March 2015 | CN | 104448158 | B | 04 August 2017 |
| CN | 113161549 | A | 23 July 2021 | | None | | |

Form PCT/ISA/210 (patent family annex) (January 2015)